Europäisches Patentamt

European Patent Office

Office européen des brevets

(19)

(11) Veröffentlichungsnummer : **0 096 283**
**B1**

(12) **EUROPÄISCHE PATENTSCHRIFT**

(45) Veröffentlichungstag der Patentschrift :
15.04.87

(21) Anmeldenummer : 83105096.8

(22) Anmeldetag : 24.05.83

(51) Int. Cl.⁴ : **C 08 J   3/20// C08L25/06**

(54) Verfahren zur Einarbeitung von Pigmenten in thermoplastische Kunststoffe und Haftmittel zum Gebrauch in diesem Verfahren.

(30) Priorität : 04.06.82 DE 3221044

(43) Veröffentlichungstag der Anmeldung :
21.12.83 Patentblatt 83/51

(45) Bekanntmachung des Hinweises auf die Patenterteilung : 15.04.87 Patentblatt 87/16

(84) Benannte Vertragsstaaten :
BE CH DE FR GB IT LI NL

(56) Entgegenhaltungen :
US-A- 3 462 390

(73) Patentinhaber : Merck Patent Gesellschaft mit beschränkter Haftung
Frankfurter Strasse 250
D-6100 Darmstadt (DE)

(72) Erfinder : Kieser, Manfred, Dr.
Händelstrasse 39
D-6100 Darmstadt (DE)

## Beschreibung

Die Erfindung betrifft Haftmittel, die bei der Einarbeitung von Pigmenten in thermoplastische Kunststoffe verwendet werden.

Es ist bekannt, daß bei der Pigmentierung von granulierten, thermoplastischen Kunststoffen die z. B. in Spritzgießmaschinen oder Extrudern zu pigmentierten Formkörpern verarbeitet werden, der Mischung Haftmittel zugesetzt werden. Dieser Zusatz soll insbesondere eine gleichmäßige Verteilung der Pigmente in der Kunststoffschmelze bewirken.

Insbesondere bei den zur Pigmentierung von thermoplastischen Kunststoffen häufig eingesetzten Perlglanzpigmenten auf der Basis von mit Metalloxiden, insbesondere Titandioxid, beschichteten Glimmerschuppen ergeben sich häufig Schwierigkeiten, da sich die hydrophilen Pigmentaggregate in die hochviskosen meist unpolaren Kunststoffschmelzen schlecht zerteilen lassen. Die Folge davon ist eine ungleichmäßige Verteilung der Pigmente in den extrudierten, spritzgegossenen oder in sonstiger Weise verarbeiteten Kunststoffen.

Zur Verbesserung der Einarbeitung wird in der DE-A-2258729 ein Zusatz von niedermolekularem Polyäthylenwachs empfohlen. Dieser Zusatz bewirkt zwar eine Erniedrigung der Viskosität des die Pigmentpartikel primär umhüllenden Mediums, gleichzeitig wird aber dessen Polarität noch geringer, so daß als Effekt nur eine geringe Verbesserung bleibt.

Es wurde auch vorgeschlagen, der Pigment/Kunststoffgranulat-Mischung ein als Weichmacher für den Kunststoff dienendes Lösungsmittel zuzusetzen. Auch bei dieser Arbeitsweise sind jedoch nach dem Verarbeiten zahlreiche Pigmentagglomerate sogar mit bloßem Auge erkennbar. Wegen dieser so nicht befriedigenden Pigmentierung wurden daher die Pigmente häufig in Form eines master batches eingesetzt oder es wurde vor der eigentlichen Verarbeitung zu Formkörpern eine Vorgranulierung durchgeführt, wobei eine Pigment Kunststoff-Mischung über eine Extrudier-Granulier-Maschine zu einem pigmentierten Granulat verarbeitet wird und dieses Granulat dann z. B. im Spritzgießverfahren geformt wird.

In US-A-3 462 390 wird ein Verfahren beschrieben, mit dem Farbstoffkonzentrate hergestellt werden können, die dann zur Pigmentierung von Polymeren eingesetzt werden können. Dazu wird ein organisches Pigment in eine Mischung eines Polymerpulvers mit einem flüssigen Medium und Netzmitteln eingearbeitet und die Mischung getrocknet. Nach Zermahlen des dabei entstehenden klumpenförmigen Materials kann das Konzentrat mit weiteren Polymeren gemischt und verarbeitet werden. Eine einstufige Einarbeitung des Pigments in das Polymer ist dabei nicht möglich.

Sowohl die Herstellung eines master batches als auch eine Vorgranulierung bedeuten jedoch einen erheblichen Mehraufwand an Zeit und Gerätekapazität, der die Produktion erheblich verteuert.

Es bestand also ein Bedürfnis nach einem verbesserten Verfahren.

Es wurde nun gefunden, daß überraschenderweise der Zusatz einer geringen Menge eines Tensids zu den schon früher als Haftmittel verwendeten Lösungsmitteln eine erhebliche Verbesserung bei der Einarbeitung bewirkt.

Gegenstand der Erfindung ist daher ein Haftmittel zum Gebrauch bei der Einarbeitung von Pigmenten in thermoplastische Kunststoffe, enthaltend einen Phthalsäureester mit linearen, verzweigten oder auch cyclischen Alkoholen mit bis zu 12 C-Atomen, einen Ester einer aliphatischen Dicarbonsäure, einen Fettsäureester oder einen Zitronensäureester, und ein unter Arbeitsbedingungen temperaturstabiles Tensid.

Gegenstand der Erfindung ist auch ein Verfahren zur Einarbeitung von Pigmenten in thermoplastische Kunststoffe, wobei ein Kunststoffgranulat mit dem Pigment gemischt und dann unter Wärmeeinwirkung verformt wird, das dadurch gekennzeichnet ist, daß dem Granulat ein Haftmittel, wie vorstehend definiert, zugesetzt wird.

Hauptvorteil der vorliegenden Erfindung ist, daß mit dem erfindungsgemäßen Haftmittel und dem erfindungsgemäßen Verfahren nunmehr ohne master batch und ohne Vorgranulierung eine homogene Verteilung selbst feinster, stark zur Agglomeration neigender Pigmente in einem thermoplastischen Kunststoff erzielt wird.

Als üblicherweise als Weichmacher für Kunststoffe verwendete Lösungsmittel können z. B. Phthalsäureester mit linearen, verzweigten oder auch cyclischen Alkoholen mit bis zu 12 C-Atomen, wie z. B. Dioctylphthalat (Di-2-ethylhexylphthalat), Diisononylphthalat, Diisodecylphthalat, Dibutylphthalat, Diisobutylphthalat und Dicyclohexylphthalat, aliphatische Dicarbonsäureester, wie z. B. Ester der Adipin-, Sebacin- oder der Acelainsäure, Fettsäureester, Zitronensäureester und andere Weichmacher, wie sie z. B. in Kirk-Othmer, Band 15, Seite 720 bis 789 genannt sind, eingesetzt werden. Bevorzugt werden Phthalsäureester und insbesondere Dioctylphthalat verwendet. Dabei können auch Mischungen verschiedener Weichmacher eingesetzt werden.

Als Tenside kommen im Prinzip alle anionischen, kationischen, ampholytischen und nichtionischen Tenside in Betracht, die einerseits mit dem jeweiligen Kunststoff und dem Lösungsmittel verträglich sind und andererseits unter den Verarbeitungsbedingungen stabil sind, also insbesondere erhöhte Temperaturen von z. B. 200 bis 300 °C aushalten.

Bevorzugt werden nichtionische Tenside, wie z. B. Polyether, insbesondere Alkylphenolpolyglycolether, Ethoxylierungsprodukte von Fettsäuren, Fettsäureamiden, Fettaminen und Fettalkoholen, Aminoxide und Fettsäureester von Polyalkoholen, insbesondere Zuckeralkoholen, und Ethoxylierungsprodukten davon verwendet.

Die Tenside werden in der Regel in Mengen von 0,1-5 Gew.% dem Weichmacher zugesetzt, insbesondere haben sich Mengen von 1 bis 3 Gew.% als nützlich erwiesen.

Das so erhaltene Haftmittel wiederum wird der Pigment/Kunststoffgranulat-Mischung in einer Menge von etwa 0,05 bis 2 Gew.% insbesondere etwa 0,2 bis 1 Gew.% zugesetzt.

Mit den erfindungsgemäßen Haftmitteln können im Prinzip alle Arten von Pigmenten und damit verwandten Produkten, wie z. B. Füllstoffe oder sonstige Zusatzstoffe, in thermoplastische Kunststoffe eingearbeitet werden. Insbesondere empfiehlt sich der Einsatz der erfindungsgemäßen Haftmittel bei stark zur Agglomeration neigenden, insbesondere feinteiligen Pigmenten. Aufgrund der plättchenförmigen Gestalt neigen insbesondere auch Perlglanzpigmente auf Basis von mit Metalloxiden beschichteten Glimmerschuppen, dabei insbesondere die feinteiligen Sorten, stark zur Agglomeration, so daß eine bevorzugte Anwendung der Erfindung sich auf die Einarbeitung solcher Pigmente bezieht.

Die Herstellung der Pigment/Kunststoffgranulat-Mischung erfolgt in der Regel so, daß in einem geeigneten Mischer das Kunststoffgranulat vorgelegt und mit dem Haftmittel benetzt wird und danach das Pigment zugesetzt und z. B. einige Minuten untergemischt wird.

Die so erhaltene Mischung kann dann direkt in einem Extruder oder einer Spritzgießmaschine verarbeitet werden. Die bei der Verarbeitung gebildeten Formkörper zeigen eine sehr homogene Verteilung des Pigments, wobei selbst bei sehr kritischer Betrachtung kaum noch Pigmentagglomerate sichtbar sind.

Durch die Erfindung wird daher ein sehr wertvoller Beitrag zur Verarbeitung von Pigmenten in thermoplastischen Kunststoffen geliefert.

Beispiel 1

In einem Taumelmischer wird 1 kg Polystyrolgranulat mit einer 2 %igen Lösung von Polyoxyethylensorbitanmonooleat in Dioctylphthalat gleichmäßig benetzt und mit 10 g eines $TiO_2$-Glimmer-Perlglanzpigments mit einer Teilchengröße von 10 bis 50 µm versetzt. Nach 2-minütigem Mischen wird das Granulat in einer Spritzgießmaschine zu Plättchen verarbeitet. Im fertigen Spritzling sind auch bei sehr kritischer Betrachtung kaum noch Pigmentagglomerate sichtbar. Der Perlglanz ist sehr gut und homogen.

Beispiel 1 a)

Es wird analog Beispiel 1 gearbeitet, wobei als Haftmittel jedoch 5 g reines Dioctylphthalat oder 5 g einer Dioctylphthalat/Glycolsäurebutylester-Mischung (9 : 1) verwendet wird. Nach dem Verspritzen dieses Granulates auf einer Spritz-Gieß-Maschine sind im fertigen Spritzling mit bloßem Auge eine große Anzahl von Pigmentagglomeraten feststellbar.

Beispiel 1 b)

Es wird entsprechend Beispiel 1 a) eine Pigment/Kunststoffgranulat-Mischung hergestellt. Dieses Granulat wird über eine Extrudier-Granulier-Maschine vorgranuliert und erst danach mit einer Spritzgießmaschine zu Plättchen verspritzt. Im Spritzling sind deutlich weniger Pigmentagglomerate sichtbar als bei Beispiel 1 a), jedoch ist das Ergebnis dem nach Beispiel 1 unterlegen.

Beispiel 2

Es wird analog Beispiel 1 gearbeitet, jedoch als Haftmittel eine 5 %ige Lösung von Polyoxyethylensorbitanmonooleat in Dioctylphthalat verwendet. Der fertige Spritzling zeigt sehr guten Perlglanz und kaum noch Pigmentagglomerate.

Beispiel 3

Es wird wie in Beispiel 1 gearbeitet, jedoch als Pigment 10 g eines sehr feinteiligen $TiO_2$-Glimmer-Perlglanzpigmentes mit einer Teilchengröße von max. 10 µm verwendet. Auch bei Verwendung dieses sehr feinteiligen Pigmentes zeigt der fertige Spritzling kaum noch Pigmentagglomerate und sehr guten Perlglanz.

Beispiel 3 b)

Eine Verarbeitung des gleichen Pigmentes entsprechend dem Verfahren nach Beispiel 1 b) unter Verwendung von reinem Dioctylphthalat als Haftmittel führt trotz Vorgranulierung der Mischung zu einer unbefriedigenden Pigmentverteilung mit zahlreichen Agglomeraten.

**Patentansprüche**

1. Haftmittel zum Gebrauch bei der Einarbeitung von Pigmenten in thermoplastische Kunststoffe, enthaltend als Lösungsmittel einen Phthalsäureester mit linearen, verzweigten oder auch cyclischen Alkoholen mit bis zu 12 C-Atomen, einen Ester einer aliphatischen Dicarbonsäure, einen Fettsäureester oder einen Zitronensäureester, und ein unter den Arbeitsbedingungen temperaturstabiles Tensid.

2. Haftmittel nach Anspruch 1, dadurch gekennzeichnet, daß 95-99,9 Gew.% des Lösungsmittels und 0,1-5 Gew.% des Tensids enthalten sind.

3. Haftmittel nach einem der Ansprüche 1 bis 3, dadurch gekennzeichnet, daß als Tensid ein nichtionisches Tensid enthalten ist.

4. Verfahren zur Einarbeitung von Pigmenten in thermoplastische Kunststoffe, wobei ein Kunststoffgranulat mit dem Pigment gemischt und dann unter Wärmeeinwirkung verformt wird, dadurch gekennzeichnet, daß dem Granulat ein Haftmittel nach Anspruch 1 zugesetzt wird.

5. Verfahren nach Anspruch 5, dadurch gekennzeichnet, daß etwa 0,05 bis 2 Gew.% des Haftmittels zugesetzt werden.

6. Verfahren nach Anspruch 5 oder 6, dadurch gekennzeichnet, daß als Pigment ein mit Metalloxyden beschichtetes Glimmerschuppenpigment eingesetzt wird.

## Claims

1. Adhesion promoter for use when incorporating pigments into thermoplastics, containing as a solvent an ester of phthalic acid with linear, branched or cyclic alcohols having up to 12 C-atoms, an ester of an aliphatic dicarboxylic acid, a fatty acid ester or a citric acid ester, and a surfactant stable under the temperatures of the operating conditions.

2. Adhesion promoter according to Claim 1, characterised in that it contains 95-99,9 % by weight of the solvent and 0.1-5 % by weight of the surfactant.

3. Adhesion promoter according to one of Claims 1 to 2, characterised in that it contains, as the surfactant, a nonionic surfactant.

4. Process for incorporating pigments into thermoplastics, in which granules of plastic are mixed with the pigment and are then shaped by the influence of heat, characterised in that an adhesion promoter according to Claim 1 is added to the granules.

5. Process according to Claim 4, characterised in that about 0.05 to 2 % by weight of the adhesion promoter are added.

6. Process according to Claim 4 or 5, characterised in that the pigment employed is a mica flake pigment coated with metal oxides.

## Revendications

1. Agent d'adhérence utilisé à l'incorporation de pigment dans des matières thermoplastiques, contenant comme solvant un ester d'acide phtalique et d'alcools linéaires, ramifiés et cyclisés aussi, avec jusqu'à 12 atomes de carbone, un ester d'un acide aliphatique dicarboxylique, un ester d'acide gras ou un ester d'acide citrique et un tensioactif stable dans les conditions de transformation.

2. Agent d'adhérence selon la revendication 1, caractérisé en ce qu'il contient 95-99,9 % en poids du solvant et 0,1-5 % en poids du tensioactif.

3. Agent d'adhérence selon l'une des revendications 1 à 2, caractérisé en ce qu'il contient comme tensioactif un tensioactif non ionique.

4. Procédé d'incorporation de pigments dans des matières thermoplastiques, dans lequel un granulé de matière plastique est mélangé au pigment et est ensuite moulé sous l'effet de la chaleur, caractérisé en ce qu'au granulé on ajoute un agent d'adhérence selon la revendication 1.

5. Procédé selon la revendication 4 caractérisé en ce qu'on ajoute environ 0,05 à 2 % en poids de l'agent d'adhérence.

6. Procédé selon la revendication 4 ou 5 caractérisé en ce que comme pigment on utilise un pigment de paillette de mica revêtu d'oxydes métalliques.